# EUROPÄISCHE PATENTSCHRIFT

(11) **EP 3 890 910 B1**
(45) Veröffentlichungstag und Bekanntmachung des Hinweises auf die Patenterteilung: **21.09.2022**
(21) Anmeldenummer: 20700901.0
(22) Anmeldetag: 15.01.2020
(51) Int. Cl.: B23B 29/034

(54) **BOHRKOPF ZUM AUSKESSELN VON NICHT-ZYLINDRISCHEN INNENKONTUREN**
DRILL HEAD FOR CHAMBERING NON-CYLINDRICAL INNER CONTOURS
TÊTE DE FORAGE POUR LE POCHAGE DE CONTOURS INTÉRIEURS NON CYLINDRIQUES

(30) Priorität: 15.01.2019 DE 102019100891
(43) Veröffentlichungstag der Anmeldung: 13.10.2021
(73) Patentinhaber: Botek Präzisionsbohrtechnik GmbH, 72585 Riederich (DE)
(72) Erfinder: STREHLE, Gerhard, 88239 Wangen (DE)
(74) Vertreter: DREISS Patentanwälte PartG mbB
(86) Internationale Anmeldenummer: PCT/EP2020/050907
(87) Internationale Veröffentlichungsnummer: WO 2020/148331

(56) Entgegenhaltungen:
- DE-A1- 1 477 352
- US-A- 1 916 253
- US-A- 3 854 839
- US-A- 4 047 829

## Beschreibung

Die Erfindung betrifft einen Bohrkopf zum Auskesseln von nicht-zylindrischen Innenkonturen.

Bohrköpfe zum Auskesseln oder Innendreheinrichtungen werden häufig eingesetzt, um im Inneren von Bauteilen eine nicht-zylindrische, rotationssymmetrische Innenkontur herzustellen.

Ein typischer Anwendungsfall solcher Bohrköpfe ist das Auskesseln des geschmiedeten Beins eines Flugzeugfahrwerks. Ein solches Fahrwerksbein hat, den auftretenden Biegemomenten entsprechend, in der Regel eine kegelstumpfförmige Außenkontur. Um den Werkstoff bestmöglich auszunutzen und das Gewicht des Fahrwerksbeins zu minimieren, ist das Fahrwerksbein in vielen Fällen hohl und hat eine ebenfalls kegelstumpfförmige, d.h. nicht-zylindrische Innenkontur.

Zur Herstellung solcher Innenkonturen werden Innendreheinrichtungen oder Bohrköpfe eingesetzt, die ausgehend von einer zylindrischen Führungsbohrung die gewünschte nicht-zylindrische Innenkontur erzeugen. Eine vorhandene zylindrische Führungsbohrung mit dem Durchmesser D_{FB} wird dabei durch das Auskammerwerkzeug erweitert, so dass der Durchmesser D_{Kmax}im Bereich der Auskammerung größer als der Durchmesser D_{FB} der Führungsbohrung ist.

Bohrköpfe bestehen aus einem im Wesentlichen zylindrischen Grundkörper mit einem vorderen und hinteren Ende, zwischen denen sich eine Mittelachse erstreckt, einer zur Mittelachse konzentrischen Mantelfläche, und mehreren am Umfang angeordneten Führungsleisten. Am vorderen Ende des Bohrkopfs ist wenigstens ein radial verschiebbarer oder verschwenkbarer Plattenhalter für die Schneidplatten des Bohrkopfs angeordnet. Am hinteren Ende weist der Bohrkopf eine lösbare Schnittstelle zur Befestigung an einem Bohrrohr einer Bohrmaschine oder einer anderen Werkzeugmaschine auf.

Die Zustellung des Bohrkopfs erfolgt in der Regel über eine zentral angeordnete Steuerstange. Viele Bearbeitungsmaschinen wie z.B. CNC-gesteuerte Tiefbohrmaschinen, Drehmaschinen oder Dreh-Fräs-Bearbeitungszentren weisen inzwischen eine Vorrichtung zur Betätigung einer Steuerstange auf.

Die meisten bekannten Bohrköpfe benötigen eine Führungsbohrung in dem zu bearbeitenden Werkstück. Auf einer Seite (Eintrittsseite) der Führungsbohrung wird der auf dem Bohrrohr der Werkzeugmaschine befestigte Bohrkopf eingeführt. Zwischen Bohrrohr und dem hinteren Ende der Führungsbohrung wird ein Kühlschmierstoff (KSS), z.B. Tiefbohröl oder eine Wasser-Öl-Emulsion, zugeführt, welche sowohl die beim Auskammern entstehenden Späne abtransportiert als auch die Schneiden kühlt. Der KSStritt auf einer zweiten gegenüberliegenden Seite (Austrittsseite) des Werkstücks aus und wird dort aufgefangen und in die Maschine zurückgeführt.

Aus der DE 196 05 069 Al ist ein solcher Bohrkopf, dort als Innendreheinrichtung bezeichnet, bekannt. Der Bohrkopf weist einen in radialer Richtung, d. h. senkrecht zur Bohrungsachse, beweglichen Schieber auf, der eine Schneidplatte trägt. Ein von der Steuerstange der Werkzeugmaschine betätigter Längsschieber ist axial beweglich im Schneidkopf gelagert und über ein Keilgetriebe mit dem Schieber gekoppelt. Auf diese Weise erfolgt die Zustellung der Schneidplatte.

Aus US 3 854 839 (Gottelt) ist ein weiteres Innendrehwerkzeug mit einem Bohrkopf gemäß dem Oberbegriff des Anspruchs 1 bekannt. Das Werkzeug weist zwei in einem Grundkörper schwenkbar gelagerte Plattenhalter auf, an denen jeweils mindestens eine Schneidplatte zur Bearbeitung der gewünschten Innenkontur (=Auskammerung) des Werkstücks angebracht ist.

Die Plattenhalter sind als zweiseitige Hebel ausgebildet, deren eines Ende die Schneidplatten trägt und deren anderes Ende Kulisse aufweist. Die Kulissen beider Plattenhalter wirken mit einem Steuerbolzen zusammen, der wiederum in einem in axialer Richtung des Bohrkopfs verschiebbaren Joch befestigt ist. Das Joch wird über eine drehantriebbare Gewindespindel betätigt. Auf diese Weise wird eine axiale Steuerbewegung der Gewindespindel in eine Schwenkbewegung der Plattenhalter und schließlich in eine Zustellung der Schneidplatten umgesetzt.

Bei diesen exemplarisch erwähnten Bohrköpfen ist das Verhältnis zwischen dem maximalen Durchmesser D_{Max} der Auskammerung und dem Durchmesser der Führungsbohrung D_{FB} auf relative kleine Werte begrenzt. Dieses Verhältnis sollte möglichst groß sein. Dann kann man ausgehend von einer kleinen Führungsbohrung eine große Auskammerung herstellen.

Der Erfindung liegt die Aufgabe zugrunde, einen Bohrkopf bereitzustellen, bei dem ein großes Verhältnis zwischen dem maximalen Durchmesser D_{Max} der Auskammerung und dem Durchmesser der Führungsbohrung D_{FB} erreicht wird. Außerdem soll der Bohrkopf eine hohe Zerspanleistung ermöglichen sowie einfach und prozesssicher einsetzbar sein.

Diese Aufgabe wird erfindungsgemäß bei einem Bohrkopf zum Auskesseln, umfassend einen Grundkörper mit einem hinteren Ende und einem vorderen Ende, wobei der Grundkörper an dem hinteren Ende eine mechanische Schnittstelle zur Verbindung mit einem Bohrrohr und eine zentrale Bohrung aufweist, wobei zwei Plattenhalter an dem Grundkörper schwenkbar gelagert sind, und wobei die Plattenhalter und ein Zustellelement über eine Kulissensteuerung derart miteinander gekoppelt sind, dass eine Bewegung des Zustellelements in radialer Richtung relativ zu dem Grundkörper eine Schwenkbewegung der Plattenhalter auslöst, und wobei das Zustellelement in der Bohrung axial verschiebbar geführt ist, dadurch gelöst, dass das Zustellelement eine erste Kulisse und eine zweite Kulisse aufweist, dass an hinteren Enden der Plattenhalter ein Zapfen und optional eine Rolle vorgesehen sind, dass der Zapfen oder die Rolle eines ersten Schneidplattenhalters mit der ersten Kulisse des Zustellelements zusammenwirkt, und dass der Zapfen oder die Rolle des zweiten Schneidplattenhalters mit der zweiten Kulisse des Zustellelements zusammenwirkt. Zapfen und Kulisse bilden ein Kurvengetriebe. Die Schneidplattenhalter sind einander gegenüberliegend angeordnet. Dadurch werden die Radialkräfte beim Zerspanen nahezu vollständig eliminiert und bei gleichem Spanvolumen werden die Spandicken halbiert.

Bei dem erfindungsgemäßen Bohrkopf ist der Schwenkbereich der Plattenhalter deutlich größer als bei der aus dem Stand der Technik bekannten Lösung US 3 854 839. Dadurch ergibt sich ein weiter Verstellbereich der Plattenhalter und infolgedessen ist das Verhältnis zwischen dem maximalen Durchmesser D_{Max} einer Auskammerung und dem Durchmesser der Führungsbohrung D_{FB}, der in etwa dem Durchmesser des Grundkörpers des Bohrkopfs entspricht, größer als bei den aus dem Stand der Technik bekannten Lösungen. Bei einer Ausführungsform des erfindungsgemäßen Bohrkopfs wurde ein Verhältnis D_{Max}/D_{FB} größer 1,6 erreicht.

Außerdem sind bei dem erfindungsgemäßen Bohrkopf die Schneidplattenhalter sehr kompakt und robust gelagert und geführt, so das große Zustellungen und Vorschübe realisiert werden können.

Wegen der günstigen Hebelverhältnisse zwischen Zustellelement und den Plattenhaltern sind auch die zum Zustellen erforderlichen Stellkräfte vergleichsweise klein.

Ein Anteil an der Vergrößerung des Schwenkbereichs der Plattenhalte ist der Positionierung der Schwenkachse der Plattenhalter am vorderen Ende des Bohrkopfs zuzuschreiben.

Weil das erfindungsgemäße Zustellelement für jeden Plattenhalter eine separate Kulisse aufweist und die Kulissen sich in radialer Richtung fast über den gesamten Durchmesser des Zustellelements erstrecken, wird der Schwenkbereich der Plattenhalter bei dem erfindungsgemäßen Bohrkopf deutlich vergrößert. Die Details der erfindungsgemäßen Kulissensteuerung werden nachfolgend im Zusammenhang mit der Figurenbeschreibung noch weiter erläutert.

Ein weiterer Vorteil des erfindungsgemäßen Bohrkopfs ist darin zu sehen, dass er aus relativ wenigen Bauteilen besteht, die fertigungstechnisch gut zu beherrschen sind, so dass die Produktionskosten moderat sind und die Lebensdauer des Bohrkopfs sehr hoch ist.

Die Auskammerung wird von dem erfindungsgemäßen Bohrkopf in einem Schnitt ohne Zwischenstopps hergestellt. Das reduziert die Bearbeitungsdauer und verringert die Kosten.

In weiterer vorteilhafter Ausgestaltung der Erfindung ist an dem stirnseitigen Ende des Grundkörpers ein Lagerzapfen vorgesehen der dazu dient, den ersten und den zweiten Plattenhalter schwenkbar zu lagern.

Weil der Drehpunkt bzw. die Schwenkachse der Plattenhalter, die mit der Längsachse des Lagerzapfens zusammenfällt, am vorderen Ende des Grundkörpers angeordnet ist, bauen die Plattenhalter relativ kurz und kompakt, so dass sie auch große Kräfte, die beim Zerspanen auftreten, sicher und ohne sich zu verformen oder zu vibrieren, aufnehmen und übertragen können.

Um das Eindringen von Spänen in das Innere des Bohrkopfs wirksam zu verhindern, ist an dem stirnseitigen Ende bzw. dem vorderen Ende des Grundkörpers ein zylindrischer Vorsprung ausgebildet. Eine Längsachse des Lagerzapfens und eine Längsachse des zylindrischen Vorsprungs verlaufen koaxial zueinander. Das erleichtert bzw. ermöglicht erst eine gute Abdichtung des Bohrkopfs gegen eindringende Späne.

In weiterer vorteilhafter Ausgestaltung ist an dem stirnseitigen Ende bzw. am vorderen Ende des Grundkörpers ein Durchbruch für die Plattenhalter ausgebildet, wobei eine Längsachse des Durchbruchs orthogonal zu der Längsachse des Lagerzapfens verläuft. In andern Worten: Der Durchbruch und die Schwenkachse der Plattenhalter stehen senkrecht aufeinander.

Wenn die Plattenhalter in den Durchbruch eingesetzt werden und anschließend der Lagerzapfen durch den zylindrischen Vorsprung in die Lagerbohrungen der Plattenhalter geschoben wird, dann führen die Plattenhalter eine Schwenkbewegung aus, deren Schwenkachse mit der Längsachse des zylindrischen Vorsprungs zusammenfällt. Der Durchbruch ist so bemessen, dass die beiden Plattenhalter übereinandergelegt spielfrei aber schwenkbar in dem Durchbruch geführt werden, so dass ein erheblicher Teil der Schneidkräfte über diese flächige Führung von den Plattenhaltern in den Grundkörper eingeleitet werden. Das entlastet den Lagerzapfen, dämpft eventuell bei der Zerspanung auftretende Schwingungen und erlaubt die Übertragung sehr großer Kräfte.

Weil bei der Erfindung in vorteilhafter Ausgestaltung der erfindungsgemäße Plattenhalter mindestens Teile der Außenkontur kreisbogenförmig gestaltet sind und der Mittelpunkt dieses Kreisbogens ebenfalls mit der Längsachse des zylindrischen Vorsprungs zusammenfällt, ergibt sich unabhängig von der Schwenkstellung der Plattenhalter eine geschlossene zylindrische Außenkontur, die das Eindringen von Spänen in das Innere des Bohrkopfs unmöglich macht bzw. auf ein sehr geringes Maß reduziert. Die Kontur, welche an die kreisbogenförmige Außenkontur anschließt, bewirkt, dass die Plattenhalter gegenseitig eventuell anhaftende Späne abstreifen, und verhindert ein Verklemmen von Spänen.

Durch das Anbringen von nachstellbaren Abstreifern im Bereich des zylindrischen Vorsprungs bzw. an dem vorderen Ende des Grundkörpers kann weiter dafür Sorge getragen werden, dass keine Späne in das Innere des Bohrkopfs gelangen.

Das erfindungsgemäße Zustellelement ist zweiteilig ausgebildet, es umfasst ein Unterteil und ein Oberteil. Die Trennebene zwischen Oberteil und Unterteil verläuft bevorzugt durch die Längsachse des mehr oder weniger zylindrischen Zustellelements. Das Oberteil und das Unterteil sind bevorzugt durch Schrauben und Stifte lösbar miteinander verbunden.

Ausgehend von der Trennebene weisen sowohl das Oberteil als auch das Unterteil eine Ausnehmung auf, wobei eine Tiefe T der Ausnehmung einer Dicke D der Plattenhalter entspricht. In anderen Worten: In den Ausnehmungen des Zustellelements können die mit einem Zapfen ausgerüsteten Enden der Plattenhalter nebeneinander aufgenommen werden. Im Ergebnis werden die hinteren Enden der Plattenhalter in den Ausnehmungen spielfrei aber schwenkbar geführt und gelagert, so dass auch an dieser Stelle eventuell bei der Zerspanung auftretende Schwingungen der Plattenhalter gedämpft werden.

An den Grundflächen der Ausnehmungen sind eine erste Kulisse und eine zweite Kulisse ausgebildet.

Es soll an dieser Stelle vereinbart werden, dass dem Unterteil die erste Kulisse zugeordnet wird und dem Oberteil die zweite Kulisse zugeordnet wird. Dies hat keine Bedeutung für die Funktion, sondern erleichtert die Offenbarung und Beschreibung der Erfindung.

Die Kulissen sind so gestaltet, dass sie sich bevorzugt in radialer Richtung sich über die ganze Breite der Grundfläche der Ausnehmungen erstrecken. Das heißt, wenn man die Endpunkte der in der Regel gekrümmten Kulissen durch eine Gerade verbindet, verlaufen diese Geraden in einem Winkel von mehr als 30°, bevorzugt unter einem Winkel von mehr als 45°, zur Längsachse des Zustellelements. Dadurch kann bei einer relativ geringen Bewegung des Zustellelements in axialer Richtung ein vergleichsweise großer Schwenkwinkel der Plattenhalter realisiert werden.

Trotzdem sind die erforderlichen Zustellkräfte relativ gering und lassen sich sicher über die Kulissen und die Zapfen in den Plattenhaltern bzw. den zugehörigen Hülsen übertragen.

Falls gewünscht, können die Kulissen bogenförmig gekrümmt sein. Durch eine geeignete Formgebung der Kulissen kann ein linearer Zusammenhang zwischen einer Axialbewegung des Zustellelements relativ zu dem Grundkörper und der Zustellung der Plattenhalter hergestellt werden. Das erleichtert die Steuerung der Zustellung des erfindungsgemäßen Bohrkopfs. Es ist jedoch auch bei modernen Maschinensteuerungen ohne weiteres möglich, einen nicht-linearen Zusammenhang zwischen der Bewegung des Zustellelements im Grundkörper und der Änderung des Schneiddurchmessers des Bohrkopfs zu berücksichtigen. Dann können die Kulissen geradlinig ausgeführt werden.

In weiterer vorteilhafter Ausgestaltung ist an dem Zustellelement in einem Teil der lösbaren Kupplung ein Kupplungsstift vorhanden, der dazu dient, das Zustellelement lösbar mit der Steuerstange einer Bohrmaschine zu verbinden. Auf diese Weise wird die Zustellbewegung von der Steuerstange auf das Zustellelement übertragen.

Prinzipiell ist eine Vielzahl von Kupplungen zwischen Steuerstange und Zustellelement denkbar. Wichtige Gesichtspunkte bei der Konstruktion dieser Kupplung ist, dass sie einfach aufgebaut und robust ist. Außerdem muss diese Kupplung auch einfach lösbar und verriegelbar sein. Eine bevorzugte erfindungsgemäße Ausführungsform sieht vor, dass das Kupplungsstück über ein Gewinde mit der Steuerstange verbunden ist und das Kupplungsstück eine umlaufende Nut aufweist. In diese Nut kann ein Kupplungsstift, der in einer Gewindebohrung des Zustellelements radial von außen betätigbar ist, eingedreht werden. Sobald der Kupplungsstift in die Nut des Kupplungselements eintaucht, ist eine formschlüssige Verbindung zwischen Steuerstange und Zustellelement hergestellt und es können die Zustellbewegungen in Form einer axialen Relativbewegung der Steuerstange, bezogen auf den Grundkörper des Bohrkopfs, direkt und unmittelbar auf das Zustellelement übertragen werden.

Es ist auch möglich, den erfindungsgemäßen Bohrkopf bei verschiedenen Durchmessern von Führungsbohrungen in dem Werkstück einzusetzen. Wenn also beispielsweise eine Führungsbohrung deutlich größer ist als der Außendurchmesser des Bohrkopfs, kann eine Adapterhülse auf den erfindungsgemäßen Bohrkopf aufgesetzt werden, deren Außendurchmesser dem Durchmesser der im Werkstück vorhandenen Führungsbohrung entspricht. Dadurch ist es möglich, den erfindungsgemäßen Bohrkopf bei verschiedenen Werkstücken mit unterschiedlichen Führungsbohrungsdurchmessern einzusetzen. Das erspart die Anschaffung verschiedener Bohrköpfe mit unterschiedlichen Durchmessern und ist daher sehr wirtschaftlich.

Die Adapterhülse wird am vorderen Ende des Bohrkopfs über eine Passfläche zentriert. Am hinteren Ende des Bohrkopfs bzw. am hinteren Ende der Adapterhülse wird ein Zwischenring zwischen dem Außendurchmesser des Grundkörpers und dem Adapterring geschoben, so dass auch am hinteren Ende der Adapterring exakt positioniert und zentriert ist.

Es versteht sich von selbst, dass sowohl an dem Grundkörper als auch an der Adapterhülse Führungsleisten und/oder Dämpfungsleisten angeordnet sind.

Weitere Vorteile und vorteilhafte Ausgestaltungen der Erfindung sind der nachfolgenden Zeichnung und deren Beschreibung und den Patentansprüchen entnehmbar. Alle in der Zeichnung, deren Beschreibung und den Patentansprüchen offenbarten Merkmale können sowohl einzeln als auch in beliebige Kombination miteinander erfindungswesentlich sein.

### Zeichnung

Es zeigen:
- Figur 1: einen Schnitt durch ein Ausführungsbeispiel eines erfindungsgemäßen Bohrkopfs mit eingefahrenen Plattenhaltern bzw. Schneidplatten;
- Figur 2: einen Schnitt durch das gleiche Ausführungsbeispiel eines Bohrkopfs mit ausgeschwenkten Plattenhaltern bzw. Schneidplatten;
- Figuren 3 und 4: Darstellungen ähnlich wie die Figuren 1 und 2, wobei aus Gründen der Übersichtlichkeit ein Plattenhalter entfernt wurde;
- Figuren 5.1 a) und b): den Grundkörper des erfindungsgemäßen Bohrkopfs in zwei Ansichten;
- Figuren 5.2 c) bis f): den Grundkörper des erfindungsgemäßen Bohrkopfs in verschiedenen Schnitten;
- Figuren 6 a) bis e): das Unterteil eines Zustellelements, in verschiedenen Ansichten;
- Figuren 7 a) bis e): das Oberteil des Zustellelements;
- Figur 8: einen ersten Plattenhalter 4, teilweise geschnitten;
- Figur 9: den zweiten Plattenhalter 5, teilweise geschnitten;
- Figur 10: den ersten und den zweiten Plattenhalter übereinandergelegt;
- Figuren 11: a) bis e) und 12 a) bis d) Ansichten verschiedener Einzelteile des erfindungsgemäßen Bohrkopfs;
- Figuren 13: a) bis c) eine erfindungsgemäße Adapterhülse;
- Figur 14: einen Längsschnitt durch einen erfindungsgemäßen Bohrkopf mit aufgesetzter Adapterhülse; und
- Figuren 15 bis 17: verschiedene Schnittdarstellungen des erfindungsgemäßen Bohrkopfs.

### Beschreibung des Ausführungsbeispiels

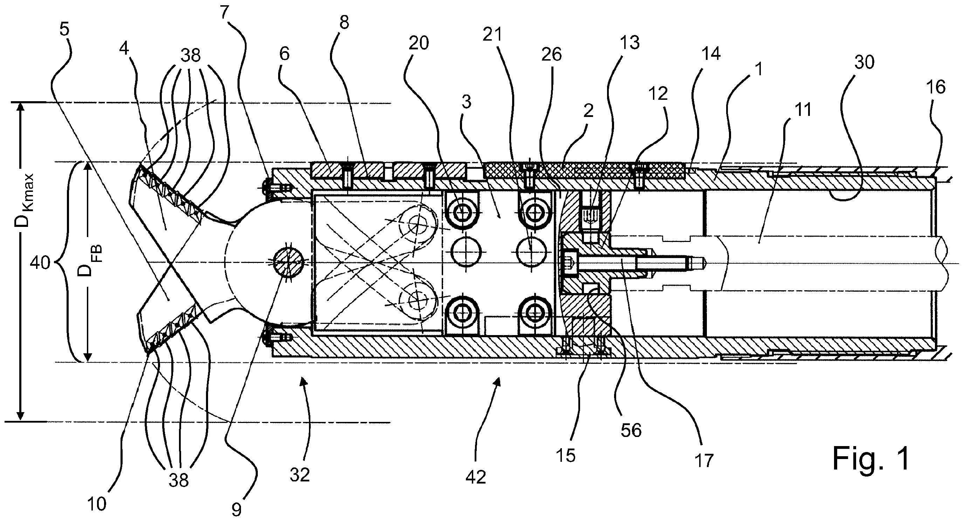

Die Figuren betreffen ein und dasselbe Ausführungsbeispiel. In den Figuren 1, 2, 3 und 4 ist der Fokus mehr auf die Funktion des Bohrkopfs gelegt, während viele der anderen Zeichnungen Einzelteile und konstruktive Details des Bohrkopfs zeigen.

Weil es sich bei dem erfindungsgemäßen Bohrkopf um ein relativ komplexes Werkzeug handelt, lassen sich in den Zusammenbauzeichnungen (z. B. Figuren 1 bis 4) nicht alle Details erkennen. Daher werden die Einzelteile in gesonderten Zeichnungen in verschiedenen Ansichten dargestellt, so dass sich aus der Zusammenschau aller Figuren die Funktionsweise und der Aufbau des erfindungsgemäßen Bohrkopfs erschließt.

Die Figur 1 zeigt einen Längsschnitt durch einen erfindungsgemäßen Bohrkopf, wobei der Bohrkopf einen rohrförmigen Grundkörper 1 mit einer zentralen Bohrung 30 umfasst. Das in Figur 1 rechte Ende des Grundkörpers 1 ist das hintere Ende, während in der Figur 1 auf der linken Seite das vordere Ende 32 des Grundkörpers 1 bzw. des Bohrkopfs dargestellt ist.

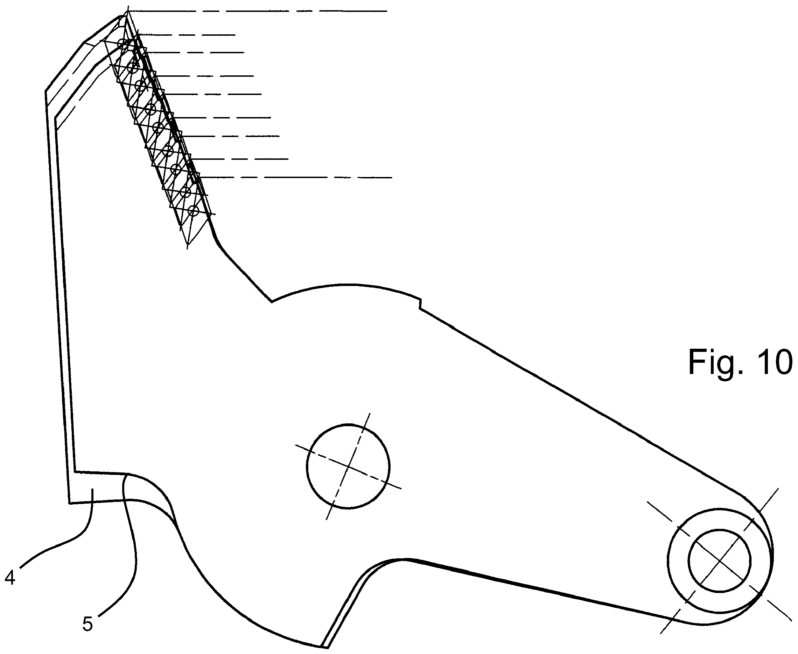

Am vorderen Ende 32 des Grundkörpers 1 ist ein Lagerzapfen 9 sichtbar, an dem zwei Plattenhalter 4 und 5 schwenkbar gelagert sind. Die Plattenhalter 4 und 5 sind zweiarmige Hebel, deren Drehpunkt durch den Lagerzapfen 9 bestimmt ist. Links des Lagerzapfens 9 sind die ersten Hebel der Plattenhalter 4, 5 dargestellt, an dem mehrere Schneidplatten 38 angeordnet sind. Die Verwendung einer Mehrzahl von relativ kleinen Schneidplatten hat den Vorteil, dass schmale Späne entstehen. An dem ersten Hebel des Plattenhalters 4 sind insgesamt fünf Schneidplatten 38 angeordnet, während an dem ersten Hebel des Plattenhalters 5 vier Schneidplatten 38 angeordnet sind. Die Schneidplatten 38 der beiden Plattenhalter sind auch etwas versetzt so an den Plattenhaltern 4 und 5 angeordnet, so dass sich ein unterbrochener Schnitt bzw. vergleichsweise schmale Späne ergeben. Dieser Versatz ist in der Figur 10 illustriert.

In der Figur 1 sind die Plattenhalter 4, 5 in der voll eingeschwenkten Position dargestellt, so dass die Spitzen der äußersten Schneidplatten 38 nicht über einen Durchmesser D_{FB} einer Führungsbohrung, die durch eine strichpunktierte Linie 40 angedeutet ist, hinausragen.

Um diese Schwenkstellung der Plattenhalter 4 und 5 zu erreichen, muss ein Zustellelement 42, von dem in der Figur 1 ein Oberteil 3 und ein Teil eines Unterteils 26 sichtbar ist, ganz zum vorderen Ende 32 in der zentralen Bohrung 30 geschoben werden. Diese Zustellbewegung wird über eine Steuerstange 11 und ein Kupplungsstück 12 auf das Zustellelement 42 übertragen.

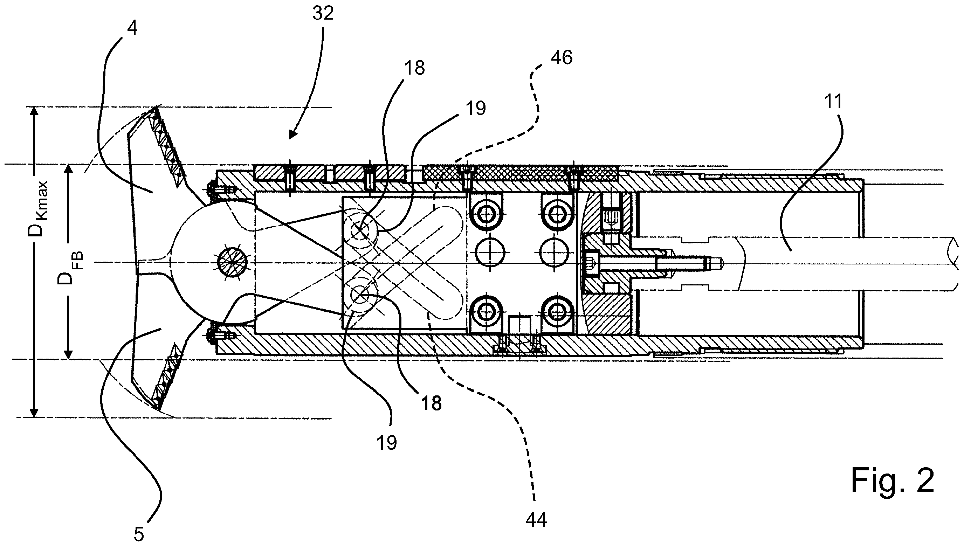

Wenn die Steuerstange 11, wie in der Figur 2 dargestellt, relativ zu dem Grundkörper 1 nach rechts bewegt wird, dann nimmt sie das Zustellelement 42 mit. In Folge dessen schwenken die Schneidplatten 4 und 5 nach außen, so dass die Spitzen der Schneidplatten 38 in radialer Richtung deutlich über den Durchmesser des Grundkörpers 1 bzw. der Führungsbohrung hinausragen. In der Figur 2 ist der maximale Durchmesser Dₘₐₓ eingezeichnet. Ebenso wie der Durchmesser D_{FB} der Führungsbohrung 40, der dem minimalen Durchmesser des Bohrkopfs entspricht. Das Verhältnis D_{max /}D_{FB} ist bei dem dargestellten Ausführungsbeispiel größer als 1,55.

In den Figuren 2 und 10 ist gut zu erkennen, dass die Plattenhalter 4 und 5 etwas unterschiedliche Geometrien aufweisen, so dass die Durchmesser, auf denen die Schneidplatten 38 angeordnet sind, voneinander verschieden sind. Bei dem dargestellten Ausführungsbeispiel wird der Enddurchmesser durch die äußerste Schneidplatte 38 am Plattenhalter 4 hergestellt. Dem gegenüber sind die Schneidplatten 38 des Plattenhalters 5 radial etwas zurückgesetzt angeordnet.

Die Schwenkbewegungen der Plattenhalter 4 und 5 erfolgen durch eine zwangsgeführte Kulissensteuerung (Kurvengetriebe). An den hinteren Enden der Plattenhalter 4 und 5 ist jeweils ein Zapfen 18 und eine optionale Rolle 19 angeordnet. Jede dieser Zapfen 18 bzw. Rolle 19 greift in eine Kulisse des Zustellelements 42 ein.

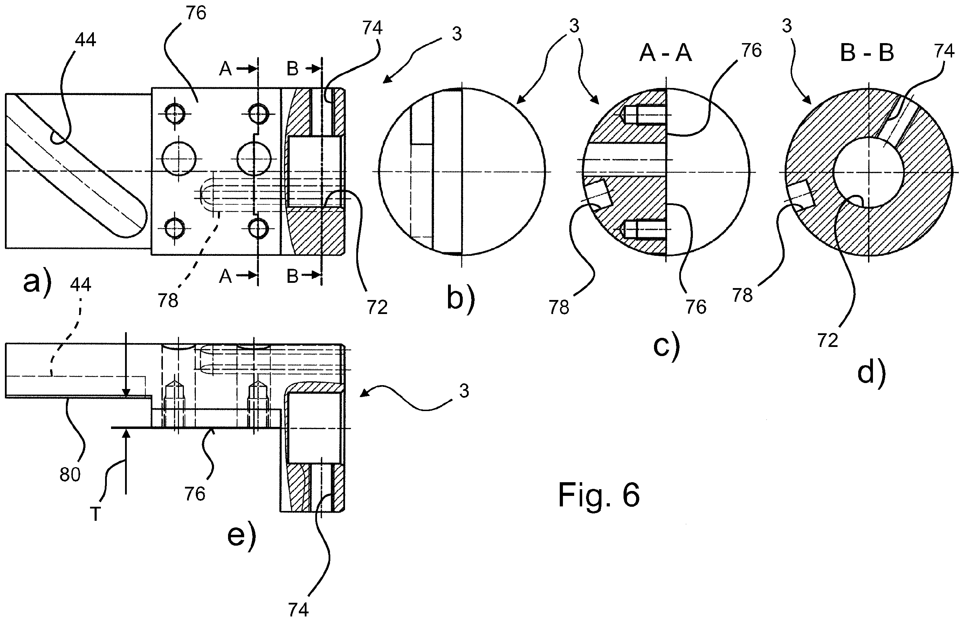

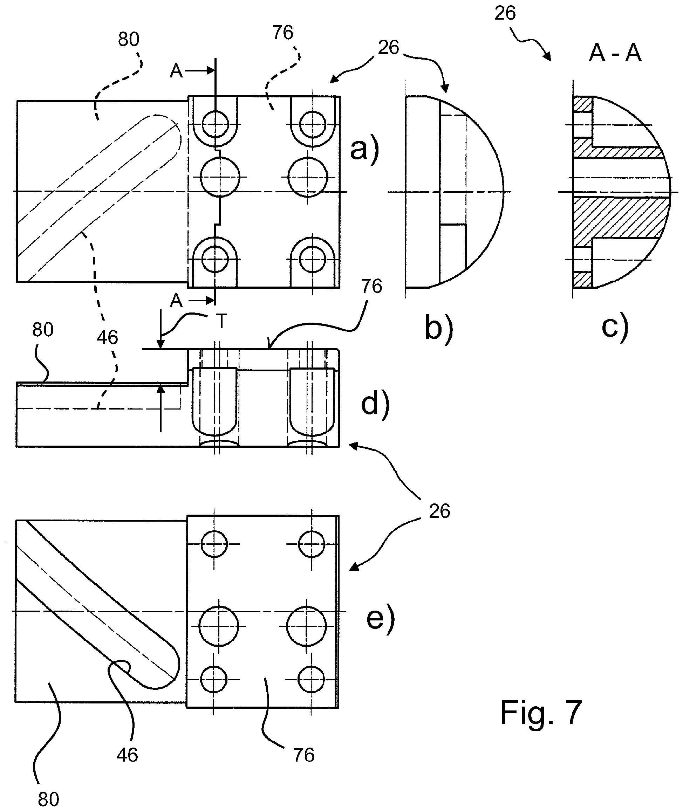

Die Einzelteile des Zustellelements 42, nämlich ein Unterteil 3 und ein Oberteil 26 sind in den Figuren 6 und 7 im Detail dargestellt. In dem Unterteil 3 ist eine erste Kulisse 44 eingearbeitet, während im Oberteil 26 eine zweite Kulisse 46 vorhanden ist. Wie man aus dem Vergleich der Figuren 1 und 2 sieht, "wandern" die Zapfen 18 und die Rollen 19 durch die Kulissen 44 und 46, wenn das Zustellelement 42 zwischen den beiden in Figur 1 und Figur 2 dargestellten Endpositionen bewegt wird.

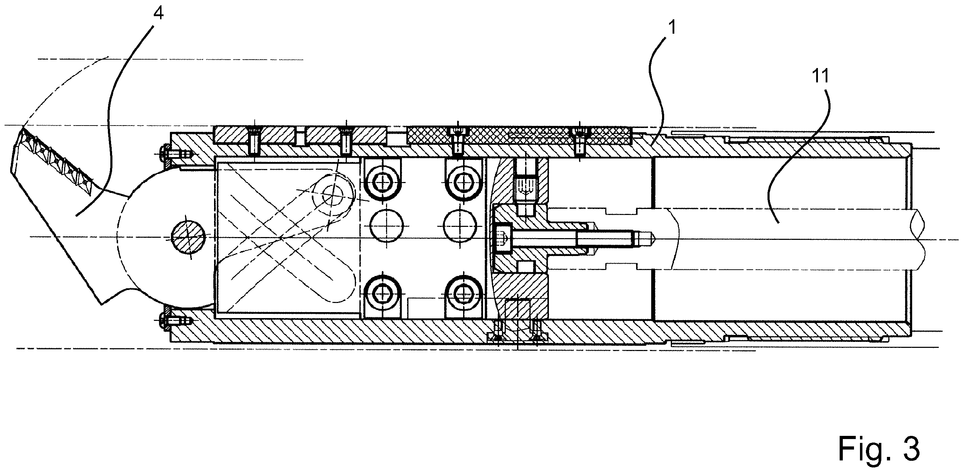

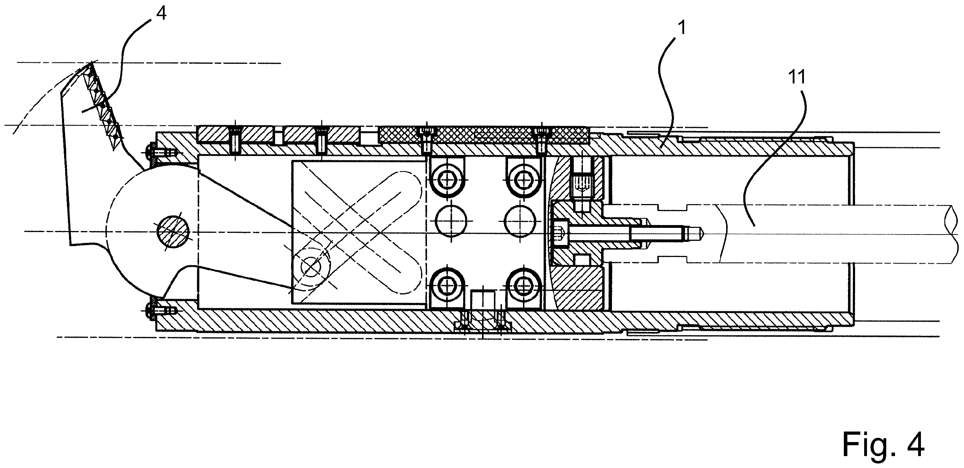

Anhand der Figuren 3 und 4 ist die Kulissensteuerung am Beispiel des Plattenhalters 4 nochmals dargestellt. Aus Gründen der Übersichtlichkeit ist der Plattenhalter 5 nicht dargestellt.

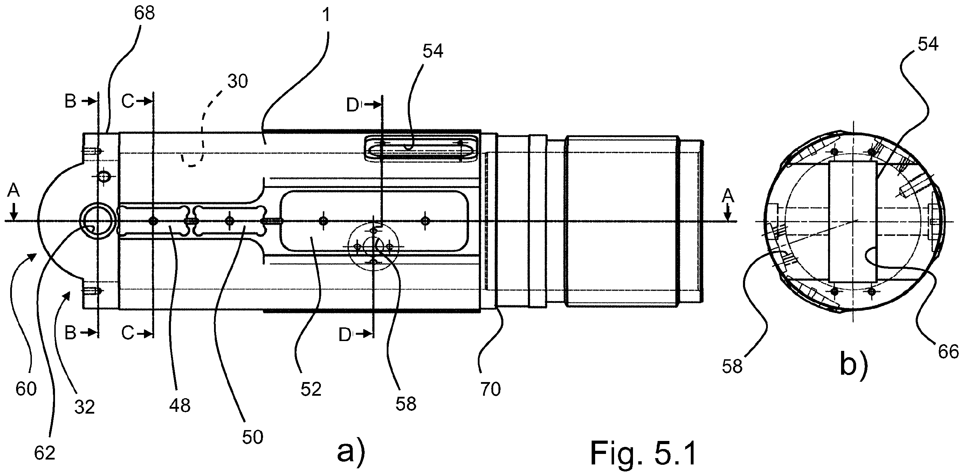

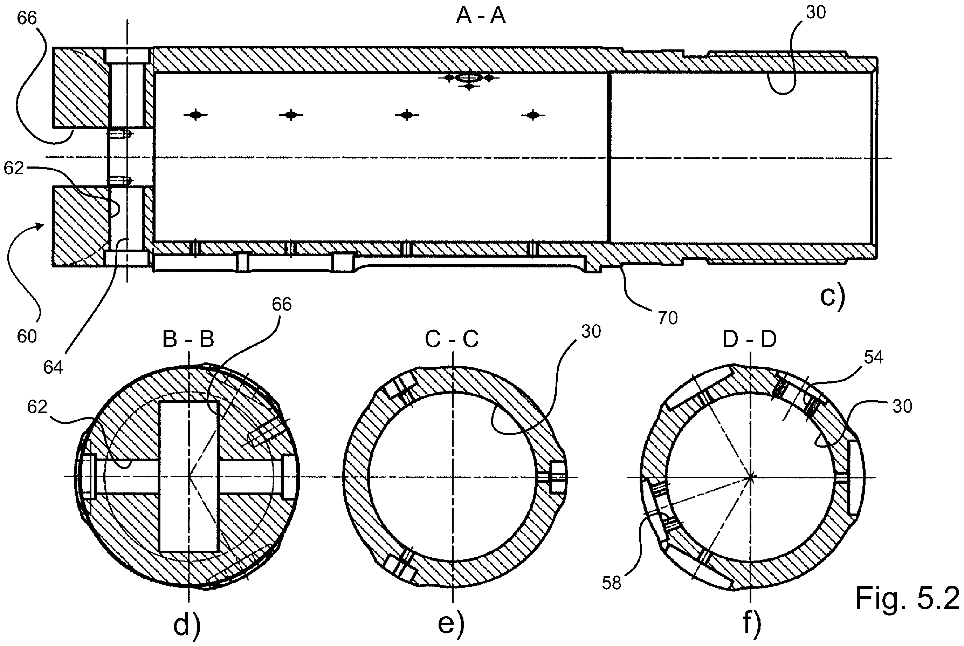

In der Figur 5.1 ist der Grundkörper 1 in einer Seitenansicht (Fig. 5.1a)) und einer Ansicht von vorne (Fig. 5.1b)) dargestellt. In der Figur 5.2 ist der Grundkörper 1 in einem Längsschnitt (Fig. 5.2c)) und verschiedenen Querschnitten (Fig. 5.2d) bis f)) entlang der Linien B-B, C-C und D-D dargestellt.

Wie sich aus der Seitenansicht gemäß Fig. 5.1a) ergibt, sind am Außendurchmesser des Grundkörpers 1 verschiedene Taschen 48, 50 und 52 ausgearbeitet. Die Taschen 48, 50 und 52 dienen zur Aufnahme von Führungsleisten bzw. Dämpfungsleisten.

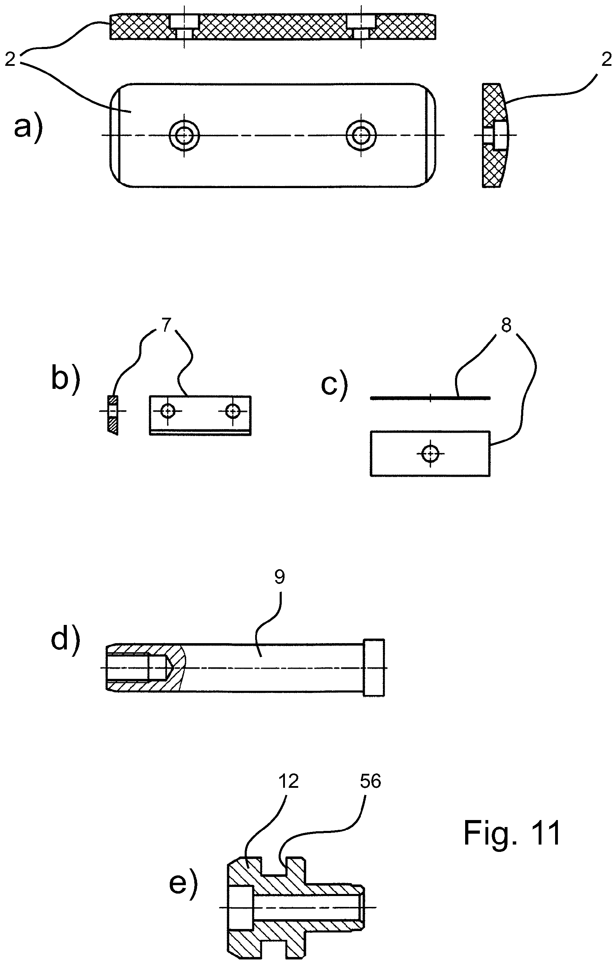

Am oberen Teil im Bereich der Linie D-D ist ein Langloch 54 vorhanden. Durch das Langloch 54 ist es möglich, einen Kupplungsstift 13 zu betätigen, so dass eine formschlüssige Verbindung zwischen dem Unterteil 26 des Zustellelements 42 und einem Kupplungsstück 12 (siehe Figuren 11a) bis e)) hergestellt wird. Wie sich zum Beispiel aus der Figur 1 ergibt, wird der Kupplungsstift 13 in eine Umfangsnut 56 des Kupplungsstücks 12 eingedreht, um die gewünschte formschlüssige Verbindung herzustellen. Die Flanken der Umfangsnut 56 können auch leicht konisch ausgeführt werden. Das Kupplungsstück 12 wiederum ist über eine zentrale Verbindungsschraube 17 mit der Steuerstange 11 verbunden.

In der Figur 5.1a) ist auch eine Öffnung 58 zu erkennen. Durch diese Öffnung 58 wird ein Längenanschlag 15 gesteckt und mit vier Schrauben mit dem Grundkörper 1 verschraubt. Somit ist die axiale Bewegung des Zustellelements 42 innerhalb des Grundkörpers 1 beschränkt. An dem vorderen Ende 32 des Grundkörpers 1 ist ein zylindrischer Vorsprung 60 ausgebildet. Die Längsachse des zylindrischen Vorsprungs ist in der Schnittdarstellung der Figur 5.2c) mit dem Bezugszeichen 64 versehen. Sie fällt mit der Längsachse der Lagerbohrung 62 und dementsprechend auch der Längsachse des Lagerzapfens 9 zusammen.

Wie sich aus den Schnittdarstellungen der Figuren 5.2d) bis 5.2 f) ergibt, ist am vorderen Ende 32 des Grundkörpers 1 ein Durchbruch 66 vorhanden. Die Längsachse des Durchbruchs 66 fällt mit der Längsachse des Grundkörpers 1 bzw. der Bohrung 30 zusammen. Wie sich aus dem Schnitt entlang der Linie B-B (Fig. 5.1a)) ergibt, hat der Durchbruch 66 einen rechteckigen Querschnitt. In diesem Durchbruch 66 werden die Plattenhalter 4 und 5 aufgenommen und flächig geführt und gehalten. Über die Kontaktflächen zwischen Plattenhaltern 4, 5 und Durchbruch 66 wird ein Großteil der Zerspankräfte in den Grundkörper eigeleitet.

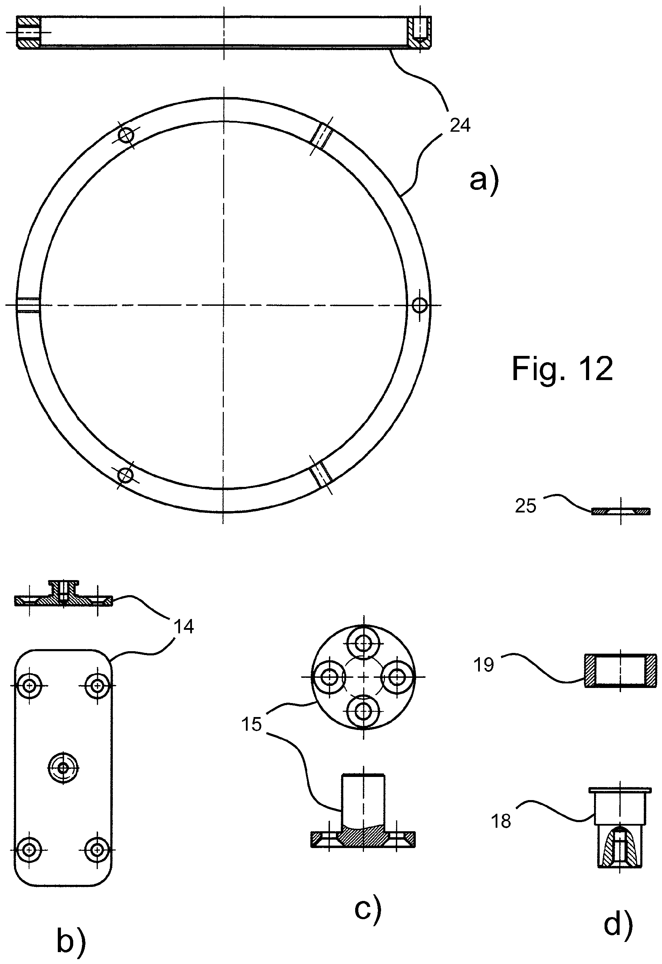

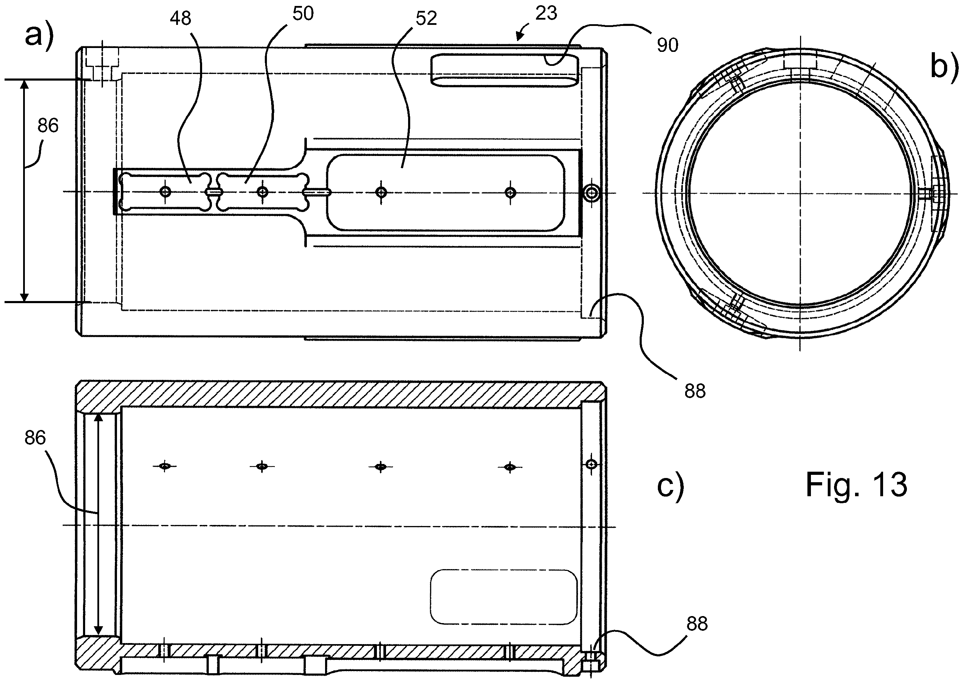

In der Seitenansicht der Figur 5.1a) ist eine Passfläche 68 im Bereich des vorderen Endes angedeutet. Sie ist letztendlich nichts anders als ein im Durchmesser etwas reduzierter Bereich, der sehr präzise geschliffen oder auf andere Art feinbearbeitet ist. An dieser Passfläche 68 kann eine Adapterhülse 23 (siehe Figur 13a)) bei Bedarf aufgesetzt werden und wird dann dort zentriert. Dieser Absatz dient auch zur Aufnahme des Bohrkopfes auf einer Drehmaschine wenn z.B. die Dämpfungsleisten nachgearbeitet werden. Am entgegengesetzten Ende des Grundkörpers 1 ist ein Absatz 70 ausgebildet, der einen Zwischenring 24 (siehe Figur 12 a)) aufnehmen kann.

In den Figuren 6 und 7 sind das Unterteil 3 (Fig. 6a)) bis e)) und das Oberteil 26 (Fig. 7a) bis e)) des Zustellelements 42 in verschiedenen Ansichten und Schnitten dargestellt. Wenn das Unterteil 3 und das Oberteil 26 miteinander verschraubt sind, haben sie eine zylindrische Außenkontur, deren Durchmesser dem Durchmesser der zentralen Bohrung 30 im Grundkörper 1 entspricht. Zwischen der zentralen Bohrung 30 im Grundkörper 1 und der zylindrischen Außenkontur von Unterteil 3 und Oberteil 26 ist eine Passung mit geringem Spiel (Spielpassung) vorhanden. Somit ist das Zustellelement 42 axial verschiebbar in der zentralen Bohrung 30 des Grundkörpers 1 geführt.

Wie sich aus dem Schnitt B-B in der Figur 6d) ergibt, ist das Unterteil 3 in diesem Bereich kreisrund ausgebildet. Der Außendurchmesser entspricht auch dort dem Durchmesser der zentralen Bohrung 30 im Grundkörper 1.

Das Unterteil weist im Zentrum eine Aufnahme 72 auf. In diese Aufnahme 72 wird das Kupplungsstück 12 (siehe Figur 1) eingesetzt. Des Weiteren ist eine radial verlaufende Gewindebohrung 74 vorhanden, die in die Aufnahme 72 mündet. Die Gewindebohrung 74 ist in den Figuren 6a) und 6e) verdreht dargestellt. In der Figur 6d) ist die Position der Gewindebohrung 74 korrekt dargestellt. In die Gewindebohrung 74 wird ein Kupplungsstift 13 (siehe Figur 1 und 2) eingedreht. Wenn der Kupplungsstift 13 in die Umfangsnut 56 (siehe Figur 1) des Kupplungsstücks 12 eingreift, besteht eine formschlüssige Verbindung zwischen Kupplungsstift 12 und dem Unterteil 3 des Zustellelements 42.

Der Kupplungsstift 13 ist in den Figuren 6a) bis e) nicht dargestellt. Er wird durch einen Schraubendreher betätigt, der durch das Langloch 54 (siehe Figur 5.1a)) in das Innere des Grundkörpers 1 gesteckt wird.

In einem mittleren Bereich (siehe die Schnittebene A-A in Figur 6c)) ist das Unterteil 3 als Halbzylinder ausgebildet. Das heißt, eine Längsachse des Kupplungselements 42 liegt bei diesem Ausführungsbeispiel in der Kontaktfläche 76 zwischen Unterteil 3 und Oberteil 26.

In den Figuren 7a) bis e) ist das Oberteil 26 des Zustellelements 42 in verschiedenen Ansichten dargestellt. Im Bereich einer Kontaktfläche 76 sind Durchgangsbohrungen, die der Aufnahme von Schrauben (nicht dargestellt) bzw. Passstiften (nicht dargestellt) dienen, ausgearbeitet.

Dadurch ist es möglich, das Oberteil 26 und das Unterteil 3 des Zustellelements 42 miteinander zu verschrauben und zu verstiften. Die Trennebene zwischen Unterteil 3 und Oberteil 26 fällt mit der Kontaktfläche zwischen den beiden Kontaktflächen 76 beider Teile zusammen.

Auch in dem Oberteil 26 ist eine Ausnehmung 80 ausgearbeitet. Am Grund der Ausnehmung 80 ist die zweite Kulisse 46 eingearbeitet.

In die zweite Kulisse 46 greift der Zapfen 18 bzw. die Rolle 19 des Plattenhalters 4 ein.

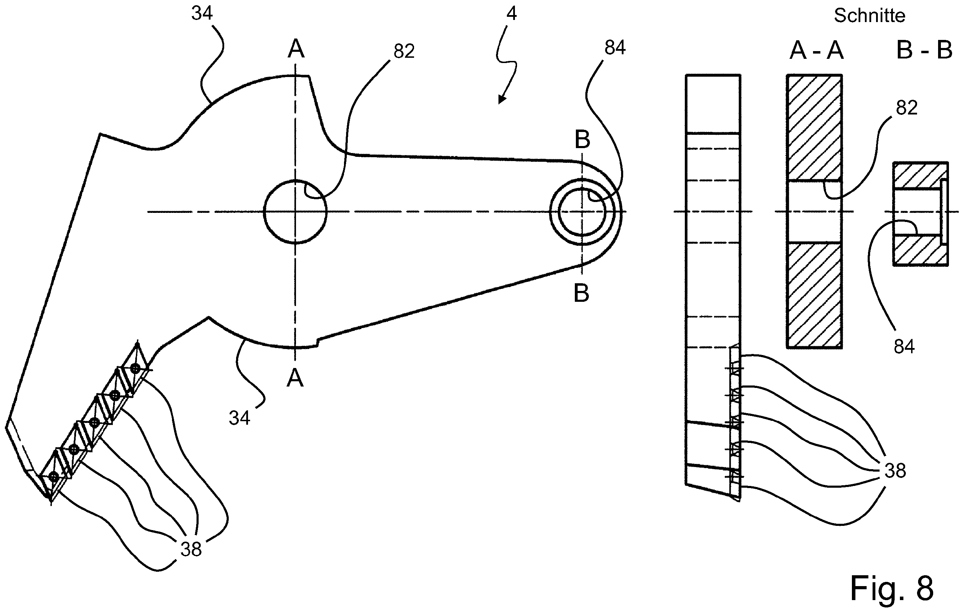

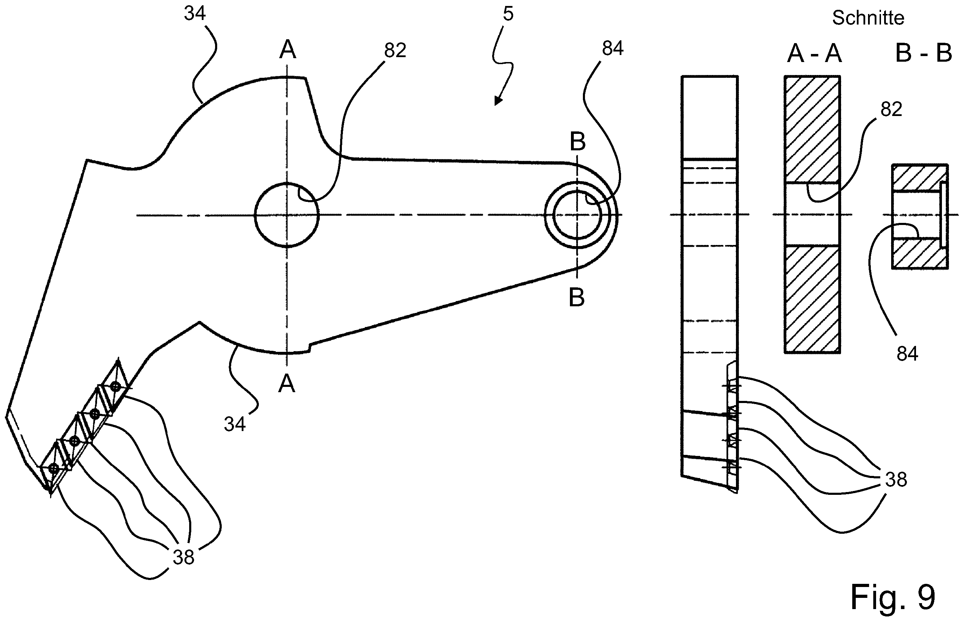

In den Figuren 8 und 9 sind die Plattenhalter 4 und 5 in verschiedenen Ansichten und Schnitten dargestellt. Aus den Figuren 8 und 9 ist gut zu erkennen, dass die Plattenhalter 4, 5 als zweiarmige Hebel aufgefasst werden können. Die Schwenkachse verläuft dabei etwa durch die Mitte der Plattenhalter 4, 5. Sie wird durch die Bohrung 82 definiert.

An dem ersten Arm der Plattenhalter 4, 5 sind Schneidplatten 38 angeordnet. Die Schneidplatten 38 der beiden Plattenhalter 4 und 5 sind nicht auf dem gleichen Durchmesser angeordnet, wie sich aus der Figur 10 ergibt. Dort sind die Plattenhalter 4 und 5 übereinandergelegt. Die Außenkontur der Plattenhalter 4 und 5 ist so gestaltet, dass jeweils zwei kreisbogenförmige Abschnitte (34) vorhanden sind. Der Mittelpunkt der Kreisbogen 34 fällt mit dem Mittelpunkt der Bohrung 82 zusammen. Die Bohrung 84 an dem in Einbaulage hinteren Ende der Plattenhalter 4, 5 dient der Aufnahme des Zapfens 18 und damit mittelbar der Rolle 19. Die Rolle 19 greift in die Kulissen 46 und 44 des Zustellelements 42 ein.

Es zeigt sich, dass die Abstände der Bohrungen 82 und 84 bei beiden Plattenhaltern 4 und 5 identisch sind. Auch sind die Kreisbogen 34 gleich gestaltet. Dadurch ergibt sich, wenn die Plattenhalter 4 und 5 in den Grundkörper eingesetzt sind, zusammen mit dem zylindrischen Vorsprung 60 eine glatte Außenkontur im Bereich des Vorsprungs 60 und Späne können nicht ins Innere des Bohrkopfs gelangen.

In der Figur 11 sind dargestellt:
Eine Dämpfungsleiste 2 (Fig. 11a)), eine Dichtleiste 7 (Fig. 11b)), die am stirnseitigen Ende 32 zur Abdichtung des Bohrkopfs im Bereich des Durchbruchs 60 eingesetzt werden, eine Abstimmplatte 8 (Fig. 11c)), die zwischen einer Führungsleiste 6 und dem Grundkörper 1 angeordnet wird, um den Durchmesser der Führungsleisten bzw. des Bohrkopfs exakt auf den Durchmesser der Führungsbohrung 40 abzustimmen.

In der Figur 11 sind außerdem ein Zapfen 9 (Fig. 11d)) und ein Kupplungsstück 12 (Fig. 11e)) dargestellt. In dem Kupplungsstück 12 ist die Umfangsnut 56 gut zu erkennen, sowie eine zentrale Bohrung (ohne Bezugszeichen). Durch die zentrale Bohrung wird eine Verbindungsschraube 17 gesteckt und in die Steuerstange 11 eingedreht, wie sich aus den Figuren 1 und 2 ergibt.

In der Figur 12a) ist ein Zwischenring 24 dargestellt. Der Zwischenring 24 dient der Zentrierung einer Adapterhülse 23 (siehe Figur 13a)). am hinteren Ende des Grundkörpers 1. In der Figur 12b) ist eine Abdeckung bzw. eine Abdeckplatte 14 dargestellt. Sie dient dazu, die Betätigungsöffnung im Grundkörper 1 abzudecken. Die Betätigungsöffnung ermöglicht die Montage des Kupplungsstifts 13 im Unterteil 3, indem der Kupplungsstift 13 in die Umfangsnut 56 des Kupplungsstücks 12 eingedreht wird (siehe Figur 1).

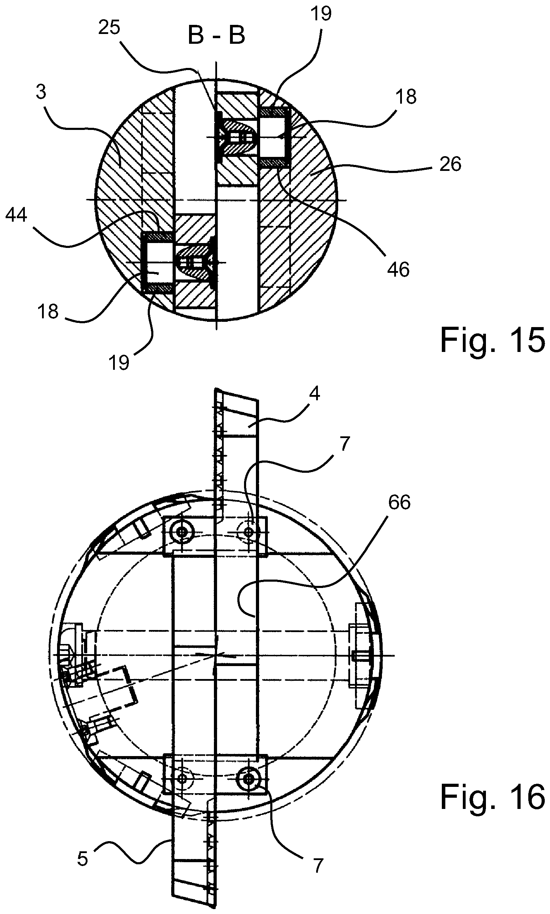

Des Weiteren sind ein Endanschlag 15 (Fig. 12c)), der Zapfen 18, eine Rolle 19 und eine Scheibe 25 (Figur 12d)) dargestellt. Die Scheibe 25 dient der axialen Fixierung des Zapfens 18 in den Plattenhaltern 4, 5 (siehe Figur 15).

In der Figur 13 ist eine Adapterhülse 23 dargestellt. Sie hat an ihrem in Figur 13a) linken Ende eine Bohrung 86, deren Durchmesser exakt auf die Passfläche 68 am vorderen Ende 32 des Grundkörpers 1 (siehe Figur 5.1a)) abgestimmt ist. Somit wird die Adapterhülse 23 am vorderen Ende 32 über die Bohrung 86 und die Passfläche 68 zentriert. Am hinteren Ende der Adapterhülse 23 (das heißt in der Figur 12a) auf der rechten Seite), ist ein Einpass 88 ausgearbeitet. Der Durchmesser des Einpasses 88 entspricht dem Außendurchmesser des Zwischenrings 24 (siehe Figur 12a)), so dass die Adapterhülse 23 am hinteren Ende über den Einpass 88 und den Zwischenring 24 am Grundkörper 1 positioniert und zentriert wird.

Die Adapterhülse 23 weist Taschen 48, 50 und 52 auf, die die gleichen Abmessungen und Funktionen wie die Taschen 48, 50 und 52 des Grundkörpers 1 haben.

In sie werden Führungsleisten und Dämpfungsleisten sowie bei Bedarf Abstimmplatten 8 eingelegt.

In der Adapterhülse 23 ist ein Durchbruch 90 ausgespart (siehe Figur 13a)). Durch diesen Durchbruch 90 kann das Langloch 54 im Grundkörper 1 und darüber der Gewindestift bzw. der Kupplungsstift 13 im Zustellelement 42 z. B. mit einem Schraubendreher oder dergleichen erreicht werden.

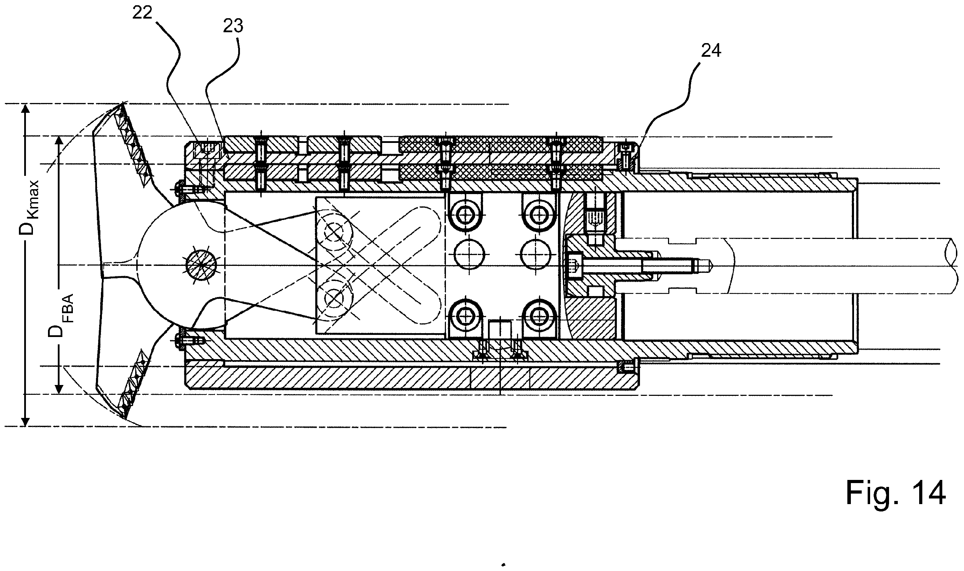

In der Figur 14 ist ein erfindungsgemäßer Bohrkopf mit aufgesetzter Adapterhülse 23 und Zwischenring 24 dargestellt. Gegenüber der Ausführung ohne Adapterhülse ist der Durchmesser der Führungsbohrung D_{FBA} größer. Auf diese Weise ist es möglich, durch den Einsatz verschiedener Adapterhülsen 23 den Bohrkopf auf verschiedene Führungsdurchmesser bzw. Durchmesser von Führungsbohrungen anzupassen.

Die Figur 15 zeigt einen Schnitt durch das Zustellelement 42 mit eingesetzten Plattenhaltern 4 und 5. Aus dieser Schnittdarstellung lässt sich die Kopplung (Kurvengetriebe) zwischen den hinteren Enden der Plattenhalter 4 und 5 und den Kulissen 46 und 44 mit Hilfe der Zapfen 18 und der Rollen 19 gut erkennen.

Die Figur 16 zeigt eine Ansicht von vorne auf den erfindungsgemäßen Bohrkopf. In dieser Darstellung ist gut zu erkennen, dass der Durchbruch 66 vollständig von den Plattenhaltern 4 und 5 aufgefüllt ist, so dass ein Eindringen von Spänen in das Innere des Bohrkopfs nahezu unmöglich ist. Außerdem sind die Dichtleisten 7 in dieser Darstellung gut zu erkennen.

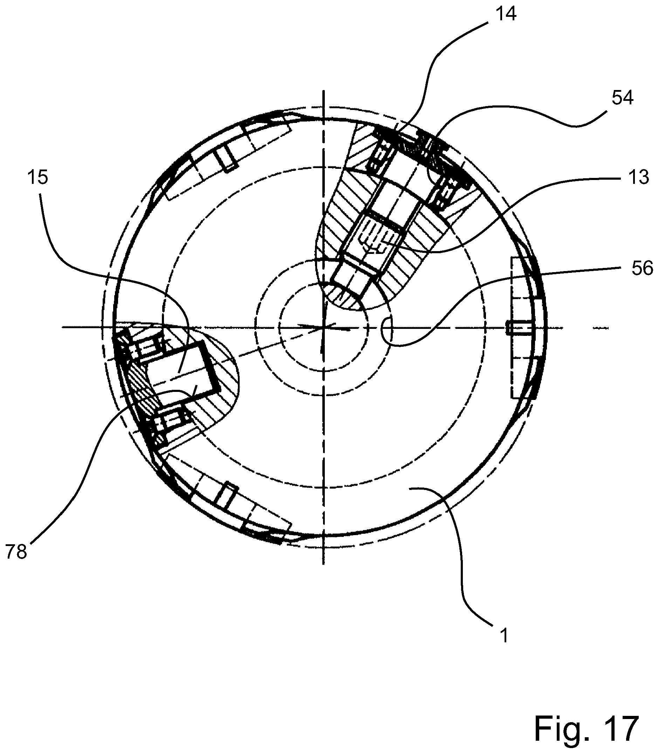

In der Figur 17 ist ein Schnitt durch den erfindungsgemäßen Bohrkopf dargestellt. In diesem Schnitt sind die Abdeckplatte 14, das Langloch 54, der Kupplungsstift 13, die Umfangsnut 56 im Kupplungsstück 12 sowie die Axialnut 78 im Zustellelement 42 und der Endanschlag 15 zu erkennen.

## Patentansprüche

1. Bohrkopf zum Auskesseln umfassend einen Grundkörper (1) mit einem hinteren Ende und einem vorderen Ende (32), wobei der Grundkörper (1) an dem hinteren Ende eine mechanische Schnittstelle zur Verbindung mit einem Bohrrohr (2) aufweist, wobei der Grundkörper (1) eine zentrale Bohrung (30) umfasst, wobei der Bohrkopf zwei Plattenhalter (4,5) umfasst, die an dem Grundkörper (1) schwenkbar gelagert sind, und wobei die Plattenhalter (4, 5) und ein Zustellelement über eine Kulissensteuerung derart miteinander gekoppelt sind, dass eine Bewegung des Zustellelements in axialer Richtung relativ zu dem Grundkörper (1) eine Schwenkbewegung der Plattenhalter (4, 5) auslöst, und wobei das Zustellelement in der Bohrung (30) axial verschiebbar geführt ist,
**dadurch gekennzeichnet, dass**
das Zustellelement (42) eine erste Kulisse (44) und eine zweite Kulisse (46) aufweist, dass an den Plattenhaltern (4, 5) ein Zapfen (18) und eine optionale Rolle (19) vorgesehen ist, dass der Zapfen (18) oder die Rolle (19) des ersten Schneidplattenhalters (4) mit der ersten Kulisse (44) des Zustellelements (42) zusammenwirkt, und dass der Zapfen (18) oder die Rolle (19) eines zweiten Schneidplattenhalters (5) mit einer zweiten Kulisse (46) des Zustellelements (42) zusammenwirkt.

2. Bohrkopf nach Anspruch 1, **dadurch gekennzeichnet, dass** an dem stirnseitigen Ende (32) des Grundkörpers (1) ein Lagerzapfen (9) vorgesehen ist, und dass der erste und der zweite Plattenhalter (4, 5) an dem Lagerzapfen (9) gelagert sind.

3. Bohrkopf nach Anspruch 2, **dadurch gekennzeichnet, dass** an dem stirnseitigen Ende (32) des Grundkörpers (1) ein zylindrischer Vorsprung (60) ausgebildet ist, und dass eine Längsachse des Lagerzapfens (9) und eine Längsachse des zylindrischen Vorsprungs (60) koaxial zueinander verlaufen.

4. Bohrkopf nach Anspruch 2 oder 3, **dadurch gekennzeichnet, dass** an dem stirnseitigen Ende (32) des Grundkörpers (1) ein Durchbruch (66) für die Plattenhalter (4, 5) ausgebildet ist, und dass eine Längsachse des Durchbruchs (66) orthogonal zu der Längsachse (64) des Lagerzapfens (9) verläuft.

5. Bohrkopf nach einem der vorhergehenden Ansprüche, **dadurch gekennzeichnet, dass** eine Außenkontur der Plattenhalter (4, 5) bereichsweise kreisbogenförmig ausgebildet ist, und dass ein Mittelpunkt des Kreisbogens (34) mit der Längsachse (64) des Lagerzapfens (9) zusammenfällt.

6. Bohrkopf nach einem der vorhergehenden Ansprüche, **dadurch gekennzeichnet, dass** das Zustellelement (42) ein Unterteil (3) und ein Oberteil (26) umfasst, dass das Unterteil (3) mit einer Steuerstange (11) verbindbar ist, und dass im Oberteil (26) und im Unterteil (3) jeweils eine Kulisse (44, 46) ausgebildet ist.

7. Bohrkopf nach Anspruch 6, **dadurch gekennzeichnet, dass** sowohl das Oberteil (26) als auch das Unterteil (3) eine Ausnehmung (80) umfassen, und das eine Tiefe (T) der Ausnehmungen (80) einer Dicke (D) der Plattenhalter (4, 5) entspricht.

8. Bohrkopf nach Anspruch 6 oder 7, **dadurch gekennzeichnet, dass** eine Teilungsebene (76) zwischen Oberteil (26) und Unterteil (3) durch eine Längsachse des Zustellelements (42) verläuft, und dass die Ausnehmungen (80) parallel zu der Teilungsebene (76) verlaufen.

9. Bohrkopf nach einem der vorhergehenden Ansprüche, **dadurch gekennzeichnet, dass** das Zustellelement (42) eine Aufnahme (72) für ein Kupplungsstück (12) und eine Gewindebohrung (74) für einen Kupplungsstift (13) umfasst.

10. Bohrkopf nach einem der Ansprüche 6 bis 9, **dadurch gekennzeichnet, dass** das Kupplungsstück (12) mit der Steuerstange (11) verbunden ist.

11. Bohrkopf nach einem der vorhergehenden Ansprüche, **dadurch gekennzeichnet, dass** er eine oder mehrere Adapterhülsen (23) umfasst.

12. Bohrkopf nach Anspruch 11, **dadurch gekennzeichnet, dass** am vorderen Ende des Grundkörpers (1) eine Passfläche (68) zum Zentrieren der Adapterhülse (23) ausgebildet ist.

13. Bohrkopf nach Anspruch 11 oder 12, **dadurch gekennzeichnet, dass** er einen Passring (24) umfasst, und dass der Passring (24) die Adapterhülse (23) am hinteren Ende des Grundkörpers (1) zentriert.

## Claims

1. Drill head for chambering, comprising a body (1) with a rear end and a front end (32), the body (1) having a mechanical interface at the rear end for connection to a drill tube (2), the body (1) comprising a central hole (30), the drill head comprising two insert holders (4,5) which are pivotably mounted on the body (1), and the insert holders (4, 5) and an advancing element being coupled to one another via a link motion in such a way that a movement of the advancing element in the axial direction relative to the body (1) triggers a pivoting movement of the insert holders (4, 5), and the advancing element being axially displaceably guided in the hole (30),
**characterized in that**
the advancing element (42) has a first slotted link (44) and a second slotted link (46), **in that** a pin (18) and optionally a roller (19) are provided on the insert holders (4, 5), **in that** the pin (18) or the roller (19) of the first insert holder (4) interacts with the first slotted link (44) of the advancing element (42), and **in that** the pin (18) or the roller (19) of the second insert holder (5) interacts with a second slotted link (46) of the advancing element (42).

2. Drill head according to claim 1, **characterized in that** a bearing pin (9) is provided on the end face (32) of the body (1), and **in that** the first and the second insert holder (4, 5) are mounted on the bearing pin (9).

3. Drill head according to claim 2, **characterized in that** a cylindrical projection (60) is formed on the end face (32) of the body (1), and **in that** a longitudinal axis of the bearing pin (9) and a longitudinal axis of the cylindrical projection (60) extend coaxially to one another.

4. Drill head according to claim 2 or claim 3, **characterized in that** an opening (66) for the insert holders (4, 5) is formed on the end face (32) of the body (1), and **in that** a longitudinal axis of the opening (66) extends orthogonally to the longitudinal axis (64) of the bearing pin (9).

5. Drill head according to any of the preceding claims, **characterized in that** an outer contour of the insert holders (4, 5) is formed in some regions in the shape of a circular arc, and **in that** a center point of the circular arc (34) coincides with the longitudinal axis (64) of the bearing pin (9).

6. Drill head according to any of the preceding claims, **characterized in that** the advancing element (42) comprises a lower part (3) and an upper part (26), **in that** the lower part (3) can be connected to a control rod (11), and **in that** a slotted link (44, 46) is formed in the upper part (26) and in the lower part (3).

7. Drill head according to claim 6, **characterized in that** both the upper part (26) and the lower part (3) comprise a recess (80), and **in that** a depth (T) of the recesses (80) corresponds to a thickness (D) of the insert holders (4, 5).

8. Drill head according to claim 6 or claim 7, **characterized in that** a dividing plane (76) between the upper part (26) and the lower part (3) extends through a longitudinal axis of the advancing element (42), and **in that** the recesses (80) extend in parallel with the dividing plane (76).

9. Drill head according to any of the preceding claims, **characterized in that** the advancing element (42) comprises a receptacle (72) for a coupling piece (12) and a threaded hole (74) for a coupling pin (13).

10. Drill head according to any of claims 6 to 9, **characterized in that** the coupling piece (12) is connected to the control rod (11).

11. Drill head according to any of the preceding claims, **characterized in that** it comprises one or more adapter sleeves (23).

12. Drill head according to claim 11, **characterized in that** a fitting surface (68) for centering the adapter sleeve (23) is formed on the front end of the body (1).

13. Drill head according to claim 11 or claim 12, **characterized in that** it comprises a fitting ring (24), and **in that** the fitting ring (24) centers the adapter sleeve (23) at the rear end of the body (1).

## Revendications

1. Tête de forage pour le pochage comprenant un corps de base (1) avec une extrémité arrière et une l'extrémité avant (32), dans laquelle le corps de base (1) présente à l'extrémité arrière une interface mécanique pour la liaison à une tige de forage (2), dans laquelle le corps de base (1) comprend un trou central (30), dans laquelle la tête de forage comprend deux porte-plaque (4, 5), qui sont montés de manière pivotante sur le corps de base (1), et dans laquelle les porte-plaque (4, 5) et un élément d'avance sont accouplés les uns aux autres par l'intermédiaire d'une commande à coulisse, de telle sorte qu'un mouvement de l'élément d'avance dans la direction axiale par rapport au corps de base (1) déclenche un mouvement de pivotement des porte-plaque (4, 5), et dans laquelle l'élément d'avance est guidé de manière mobile axialement dans le trou (30),
**caractérisée en ce que**
l'élément d'avance (42) présente une première coulisse (44) et une deuxième coulisse (46), qu'un tourillon (18) et un rouleau (19) optionnel est prévu sur les porte-plaque (4, 5), que le tourillon (18) ou le rouleau (19) du premier porte-plaque de coupe (4) coopère avec la première coulisse (44) de l'élément d'avance (42), et que le tourillon (18) ou le rouleau (19) d'un deuxième porte-plaque de coupe (5) coopère avec une deuxième coulisse (46) de l'élément d'avance (42).

2. Tête de forage selon la revendication 1, **caractérisée en ce qu'**un tourillon de montage (9) est prévu sur l'extrémité frontale (32) du corps de base (1), et que le premier et le deuxième porte-plaque (4, 5) sont montés sur le tourillon de montage (9).

3. Tête de forage selon la revendication 2, **caractérisée en ce qu'**une partie saillante cylindrique (60) est réalisée sur l'extrémité frontale (32) du corps de base (1), et qu'un axe longitudinal du tourillon de montage (9) et un axe longitudinal de la partie saillante cylindrique (60) s'étendent coaxialement l'un par rapport à l'autre.

4. Tête de forage selon la revendication 2 ou 3, **caractérisée en ce qu'**une ouverture (66) pour les porte-plaque (4, 5) est réalisée sur l'extrémité frontale (32) du corps de base (1), et qu'un axe longitudinal de l'ouverture (66) s'étend perpendiculairement à l'axe longitudinal (64) du tourillon de montage (9).

5. Tête de forage selon l'une quelconque des revendications précédentes, **caractérisée en ce qu'**un contour extérieur des porte-plaque (4, 5) est réalisé par endroits en forme d'arc de cercle, et qu'un centre de l'arc de cercle (34) coïncide avec l'axe longitudinal (64) du tourillon de montage (9) .

6. Tête de forage selon l'une quelconque des revendications précédentes, **caractérisée en ce que** l'élément d'avance (42) comprend une partie inférieure (3) et une partie supérieure (26), que la partie inférieure (3) peut être reliée à une tige de commande (11), et que respectivement une coulisse (44, 46) est réalisée dans la partie supérieure (26) et dans la partie inférieure (3).

7. Tête de forage selon la revendication 6, **caractérisée en ce qu'**aussi bien la partie supérieure (26) que la partie inférieure (3) comprennent un évidement (80), et qu'une profondeur (T) des évidements (80) correspond à une épaisseur (D) des porte-plaque (4, 5).

8. Tête de forage selon la revendication 6 ou 7, **caractérisée en ce qu'**un plan de division (76) entre la partie supérieure (26) et la partie inférieure (3) s'étend à travers un axe longitudinal de l'élément d'avance (42), et que les évidements (80) s'étendent parallèlement au plan de division (76) .

9. Tête de forage selon l'une quelconque des revendications précédentes, **caractérisée en ce que** l'élément d'avance (42) comprend un logement (72) pour une pièce d'accouplement (12) et un trou taraudé (74) pour une broche d'accouplement (13).

10. Tête de forage selon l'une quelconque des revendications 6 à 9, **caractérisée en ce que** la pièce d'accouplement (12) est reliée à la tige de commande (11).

11. Tête de forage selon l'une quelconque des revendications précédentes, **caractérisée en ce qu'**elle comprend un ou plusieurs manchons d'adaptation (23).

12. Tête de forage selon la revendication 11, **caractérisée en ce qu'**une surface d'ajustement (68) pour le centrage du manchon d'adaptation (23) est réalisée sur l'extrémité avant du corps de base (1).

13. Tête de forage selon la revendication 11 ou 12, **caractérisée en ce qu'**elle comprend une bague d'ajustement (24), et que la bague d'ajustement (24) centre le manchon d'adaptation (23) sur l'extrémité arrière du corps de base (1) .
